Europäisches Patentamt

European Patent Office

Office européen des brevets

(19)

(11) Numéro de publication: **0 267 835**
**B1**

(12) **FASCICULE DE BREVET EUROPEEN**

(45) Date de publication du fascicule du brevet: 06.02.91

(51) Int. Cl.⁵: **C 08 F 20/54**

(21) Numéro de dépôt: **87402363.3**

(22) Date de dépôt: **21.10.87**

(54) Procédé de traitement d'une solution aqueuse de résine acrylamide pour en permettre une gélification lente même à température élevée.

(30) Priorité: **22.10.86 FR 8614640**

(43) Date de publication de la demande:
**18.05.88 Bulletin 88/20**

(45) Mention de la délivrance du brevet:
**06.02.91 Bulletin 91/06**

(84) Etats contractants désignés:
**DE FR IT NL SE**

(56) Documents cités:
**DE-B-1 155 598**

**Le dossier contient des informations techniques présentées postérieurement au dépôt de la demande et ne figurant pas dans le présent fascicule.**

(73) Titulaire: **TOTAL Compagnie Française des Pétroles**
**5 rue Michel-Ange**
**F-75016 Paris (FR)**

(73) Titulaire: **Etablissements VASSET**
**59, chemin de Moisselles**
**F-95460 Ezanville (FR)**

(72) Inventeur: **Leblanc, Marie-Christine Paule**
**61, avenue de Buzenval**
**F-92500 Rueil-Malmaison (FR)**
Inventeur: **Durrieu, Josiane Andrée**
**1, rue du Chef Saint Jean**
**F-78400 Chatou (FR)**
Inventeur: **Binon, Jean-Pierre**
**chemin de la Louve Résidence "Les Impérators"**
**F-83700 St Raphael (FR)**
Inventeur: **Provin, Gérard Gabriel Lucien**
**11, rue des Marais**
**F-95460 Ezanville (FR)**
Inventeur: **Fery, Jean-Jacques**
**25, rue de la Résistance**
**F-55000 Bar Le Duc (FR)**

(74) Mandataire: **Jolly, Jean-Pierre**
**Cabinet Jolly 54, rue de Clichy**
**F-75009 Paris (FR)**

Courier Press, Leamington Spa, England.

**Description**

La présente invention concerne la gélification par polymérisation d'acrylamides à des températures supérieures aux températures ambiantes normales. Elle concerne notamment, dans l'industrie pétrolière, la consolidation des sols, par exemple pour le colmatage permanent de zones à pertes ou de réservoirs producteurs de fluides indésirables, que ces pertes proviennent de la perméabilité du sol, de fissures ou de fractures, par l'injection dans le sol de produits assurant l'étanchéité de réservoirs naturels souterrains et par la consolidation de sables pouvant en particulier résister à des pressions de 350 bars.

On a utilisé jusqu'ici, pour la gélification des acrylamides, des systèmes catalytiques à base de peroxydes minéraux, qui présentent l'inconvénient de ne pas permettre des temps de gélification supérieurs à une heure pour des températures de plus de 60°C.

Les recherches qui ont conduit à la présente invention ont été effectuées en vue de trouver un système catalytique permettant d'obtenir des temps de gélification d'un acrylamide supérieurs à une heure, même à des températures élevées, dépassant 60°C.

On a, de manière surprenante, trouvé que ce résultat pouvait être obtenu en traitant selon une procédure particulière l'acrylamide monomère à l'aide d'un initiateur de polymérisation, ainsi que d'un émulsifiant et éventuellement d'un retardateur, qui peuvent avantageusement être choisis pour être bien adaptés au résultat recherché.

La présente invention a ainsi pour objet un procédé de traitement d'une solution aqueuse d'un acrylamide monomère, pour obtenir une gélification lente, même à température élevée, caractérisé en ce qu'à une solution aqueuse de l'acrylamide monomère, on ajoute lentement et sous agitation au moins un émulsifiant et un initiateur comprenant un peroxyde organique.

On peut éventuellement ajouter aussi un retardateur. L'émulsifiant, l'initiateur et l'éventuel retardateur sont de préférence ajoutés sous la forme d'une pré-émulsion. La pré-émulsion est avantageusement homogénéisée, avant d'être émulsionnée dans la solution du monomère.

L'émulsifiant est de préférence non ionique et constitué avantageusement par un ester de sorbitan polyoxyéthyléné ou anionique et constitué avantageusement par une amide grasse sulfatée.

Le retardateur est de préférence un dérivé phénolique tel qu'un para-tertiobutyl catéchol ou une hydroquinone, un dérivé minéral alcalin tel qu'un phosphate disodique, un ferricyanure de potassium ou un carbonate alcalin.

Le peroxyde organique est de préférence un diperoxyde tel qu'un 2,2 bis (ter, butyl, peroxy) butane ou un ter, butyl, per-2-éthylhexanoate.

Le composé monomère d'acrylamide utilisé est de préférence un N-méthylol acrylamide ou un méthylol méthacrylamide.

La solution aqueuse d'acrylamide monomère est, de préférence, préalablement soumise à un traitement de densification et/ou de viscosification.

On va donner des exemples de mise en oeuvre du procede selon la presente invention.

Exemple 1

On a traité une solution aqueuse commerciale d'acrylamide ramenée à 15% de matière active pour cette application.

Une pré-émulsion du système catalytique a été préparée en mélangeant successivement, sous agitation, l'émulsifiant, le retardateur et l'initiateur. Pour traiter 1000g de solution d'acrylamide à 15% en poids de monomère, on a utilisé:

comme émulsifiant, 2g d'ester de sorbitan polyoxyéthyléné (HLB = 16,7),

comme retardateur, 2g d'une solution de para-tertiobutyl à 10% dans un phtalate,

et comme initiateur, 2g d'une solution à 50% en poids de 2,2 bis (ter, butyl peroxy) butane dans un hydrocarbure aliphatique.

Cette pré-émulsion a été introduite dans la solution à 15% de matière active sous agitation lente (la température a varié de 20°C à 50°C et le temps d'agitation de 1 heure à 24 heures). Puis, on a prélevé du mélange ainsi formé et on l'a porté dans un réacteur en verre hermétiquement clos, non agité, placé dans un bain d'huile, lui-même maintenu à une température statique réglée avec précision. Un thermocouple plongeant dans le réacteur et relié à un enregistreur a permis de mesurer avec précision les variations de température du mélange au cours de l'essai.

La gélification d'un monomère se traduit, en effet, par une brusque variation de température visualisée sur l'enregistreur. On détermine donc le temps de gélification d'un monomère à une température donnée en observant le temps qui s'écoule entre le moment où une solution de ce monomère est portée et maintenue à cette température dans un bain-marie et le début de la réaction exothermique de gélification.

Dans les essais effectués sur la solution d'acrylamide préparée comme indiqué ci-dessus, on a observé, à une température statique de 65°C, un début de prise au bout de 480 minutes et une fin de prise au bout de 580 minutes, le gel obtenu étant d'aspect souple, résistant et peu collant, tandis qu'à une température statique de 90°C on a observé un début de prise au bout de 100 minutes et une fin de prise au bout de 150 minutes, le gel obtenu étant d'aspect souple, résistant et collant.

On a effectué divers essais en présence de contaminants.

Ainsi, en présence de fer et de fer oxydé, on a observé, à une température statique de 90°C, un début de prise au bout de 68 minutes et une fin de prise au bout de 108 minutes, le gel obtenu étant d'aspect souple, résistant et collant. Avec introduction d'air par agitation, on a observé, à une température statique de 65°C, un début de prise au bout de 235 minutes et une fin de prise au bout de 295 minutes, le gel obtenu étant d'aspect souple, résistant et non collant et, à une température statique de 90°C, on a constaté un début de prise au bout de 40 minutes et une fin de prise au bout de 80 minutes, le gel obtenu étant d'aspect souple, résistant et non collant. En présente de pétrole brut, dans une proportion de 1% par rapport à la solution de monomère, on a observé, à une température statique de 90°C, un début de prise au bout de 100 minutes et une fin de prise au bout de 180 minutes, le gel obtenu étant d'aspect souple, résistant et peu collant; à la même température statique, avec une proportion de 4% de pétrole brut, le gel obtenu a un aspect similaire, mais le début de prise a été observé au bout de 300 minutes et la fin de prise au bout de 370 minutes.

En utilisant, pour l'eau de la solution, 20% d'eau de mer, on a observé, à une température statique de 90°C, un début de prise au bout de 180 minutes et une fin de prise au bout de 200 minutes, le gel obtenu étant d'aspect souple, résistant et non collant. En utilisant 60% d'eau de mer, on a observé, à une température statique de 90°C, un début de prise au bout de 170 minutes et une fin de prise au bout de 200 minutes, le gel obtenu étant d'aspect souple, résistant et peu collant. En ajoutant à la solution 0,03% en poids d'acide chlorhydrique à 15%, on a observé, à une température statique de 90°C, un début de prise au bout de 35 minutes et une fin de prise au bout de 60 minutes, le gel obtenu étant d'aspect cassant, peu résistant et non collant et, à une température statique de 60°C, un début de prise au bout de 6 heures et une fin de prise au bout de 7 heures et demie, le gel obtenu étant d'aspect cassant, peu résistant et non collant.

On a fait des essais en ajoutant à la solution divers sels minéraux.

Avec 5,86 g de chlorure de magnésium par litre de solution, on a observé, à une température statique de 90°C, un début de prise au bout de 200 minutes et une fin de prise au bout de 300 minutes, le gel obtenu étant s'aspect souple, résistant et non collant. Avec 6,84 g/l de chlorure de calcium, on a observé, à une température statique de 90°C, un début de prise au bout de 280 minutes, le gel obtenu étant d'aspect souple, résistant et non collant. Avec 7,22 g/l de chlorure de sodium, on a observé, à une température statique de 90°C, un début de prise à 140 minutes et une fin de prise à 190 minutes, le gel obtenu étant d'aspect souple, résistant et non collant. Avec 1,16 g/l de chlorure de magnésium, 1,2 g/l de chlorure de calcium et 4,51 g/l de chlorure de sodium, on a observé, à une température statique de 90°C, un début de prise au bout de 190 minutes et une fin de prise au bout de 250 minutes, le gel obtenu étant d'aspect souple, résistant et non collant. Avec 50 mg/l de carbonate de calcium, on a observé, à une température statique de 90°C, un début de prise au bout de 65 minutes et une fin de prise au bout de 75 minutes, le gel obtenu étant d'aspect souple, résistant et non collant.

## Exemple 2

On a traité une solution aqueuse d'acrylamide à 15% comme dans l'exemple 1 et selon la même procédure en faisant varier respectivement les quantités de l'un des constituants du système catalytique: émulsifiant, retardateur et initiateur, ces constituants étant les mêmes que dans l'exemple 1 et les quantités des deux constituants autres que celui dont on fait varier la quantité étant celles de l'exemple 1.

Pour 1000 g de solution d'acrylamide, on a constaté qu'avec respectivement 1,6 — 1,8 — 2 g d'émulsifiant, on obtenait les mêmes temps de prise, soit 9 h 40 à une température statique de 60°C et 2 h 30 à une température statique de 90°C.

Avec des concentrations de retardateur, pour 1000 g de solution d'acrylamide, respectivement de 1,6 — 1,8 — 2 — 2,2 — 2,4 — 3 et 3,5 g, on a obtenu des temps de prise de 9 h 30 — 9 h 30 — 9 h 40 — 11 h 40 — 12 h 30 et 24h, à une température statique de 60°C, et 2 h 30 — 2 h 30 — 2 h 30 — 2 h 40 — 2 h 40 — 3 h et 4 h 30 à une température statique de 90°C.

Avec des concentrations d'initiateur de 1 — 1,5 — 2 — 2,5 — 3 g pour 1000 g de solution de résine, on a obtenu des temps de prise respectivement de 16 h 10 — 13 h 30 — 9 h 40 — 13 h 50 et 13 h 50, à une température statique de 60°C, de 2 h 50 — 2 h 40 — 2 h 30 — 1 h 30 et 1 h 30 à une température statique de 90°C.

Le procédé qui fait l'objet de la présente invention est particulièrement intéressant dans l'industrie pétrolière, par exemple pour les applications de consolidation des sols mentionnées ci-dessus. Mais il peut être utilisé aussi dans bien d'autres domaines d'application, comme, par exemple, dans l'industrie du bois, pour préparer un agent fongicide et anti-termites, dans la récupération d'énergie solaire pour réduire les déperditions de chaleur, dans les travaux publics pour effectuer des étanchéités.

## Revendications

1. Procédé de traitement d'une solution aqueuse d'un acrylamide monomère pour obtenir une gélification lente même à température élevée, caractérisé en ce qu'à une solution aqueuse de l'acrylamide monomère, on ajoute lentement et sous agitation au moins un émulsifiant et un initiateur comprenant un peroxyde organique.

2. Procédé selon la revendication 1, caractérisé en ce que ledit émulsifiant et ladite solution d'initiateur sont ajoutés sous forme d'une pré-émulsion.

3. Procédé selon la revendication 2, caractérisé en ce que la pré-émulsion est homogénéisée avant d'être ajoutée à la solution de monomère.

4. Procédé selon la revendication 1, caractérisé en ce que l'émulsifiant est non ionique et constitué par un ester de sorbitan polyoxyéthyléné.

5. Procédé selon la revendication 1, caractérisé en ce que l'émulsifiant est anionique et constitué par une amide grasse sulfatée.

6. Procédé selon la revendication 2, caractérisé en ce que ladite pré-émulsion comprend aussi un retardateur pris dans la classe constituée par un para-tertiobutyl catéchol et de l'hydroquinone.

7. Procédé selon la revendication 2, caractérisé en ce que ladite pré-émulsion comprend aussi un retardateur pris dans la classe constituée par un phosphate disodique, un ferricyanure de potassium et un carbonate alcalin.

8. Procédé selon la revendication 1, caractérisé en ce que le peroxyde organique est un diperoxyde choisi dans la classe constituée par un 2,2 bis (ter, butyl, peroxy) butane et un ter, butyl, per-2-éthylhexanoate.

9. Procédé selon la revendication 1, caractérisé en ce que l'acrylamide monomère est choisi dans la classe constituée par le N-méthylol acrylamide et le méthylol méthacrylamide.

10. Procédé selon la revendication 1, caractérisé en ce que la solution aqueuse d'acrylamide monomère est préalablement soumise à l'un au moins des traitements constitués par une densification et une viscosification.

## Patentansprüche

1. Verfahren zur Behandlung einer wässrigen Lösung eines monomeren Akrylamides zur Erzielung einer insbesondere bei hohen Temperaturen träge ablaufenden Gelifikation, dadurch gekennzeichnet, daß der wässrigen Lösung des monomeren Akrylamides wenigstens ein Emulgator und ein organisches Peroxid enthaltender Initiator langsam und unter Rühren zugefügt werden.

2. Verfahren nach Anspruch 1, dadurch gekennzeichnet, daß der Emulgator und die Initiatorlösung im Zustand einer Voremulsion beigefügt werden.

3. Verfahren nach Anspruch 2, dadurch gekennzeichnet, daß die Voremulsion homogenisiert wird, bevor sie der monomeren Lösung beigefügt wird.

4. Verfahren nach Anspruch 1, dadurch gekennzeichnet, daß der Emulgator ionogen ist und aus einem polyoxyäthlyen-Sorbitan-Ester besteht.

5. Verfahren nach Anspruch 1, dadurch gekennzeichnet, daß der Emulgator anionisch ist und aus einem sulfonierten Fettsäureamid besteht.

6. Verfahren nach Anspruch 2, dadurch gekennzeichnet, daß die Voremulsion außerdem ein Verzögerungsmittel derjenigen Gruppe enthält, die durch ein para-Tertiobutylkatechol und durch Hydrochinon gebildet ist.

7. Verfahren nach Anspruch 1, dadurch gekennzeichnet, daß die Voremulsion außerdem ein Verzögerungsmittel derjenigen Gruppe enthält, die durch ein Dinatriumphospat, ein Kaliumferrizyanid und ein Alkalikarbonat gebildet wird.

8. Verfahren nach Anspruch 1, dadurch gekennzeichnet, daß das organische peroxid ein Diperoxid aus derjenigen Gruppe ist, die durch ein 2,2-bis- (tert. butyl, peroxid) Butan und ein tert. butyl, Per-2-Äthylhexanoat gebildet wird.

9. Verfahren nach Anspruch 1, dadurch gekennzeichnet, daß das monomere Akrylamid aus derjenigen Gruppe stammt, die durch das N-Methylol-Akrylamid und das Methylol-Metaakrylamid gebildet wird.

10. Verfahren nach Anspruch 1, dadurch gekennzeichnet, daß die wässrige Lösung des monomeren Akrylamides zuerst mindestens einer der Behandlungen zur Dichteerhöhung und Viskositätserhöhung unterworfen wird.

## Claims

1. Method of treating an aqueous solution of an acrylamide monomer so as to obtain slow gelling even at high temperature, characterized in that at least one emulsifier and an initiator comprising an organic peroxide are slowly added with stirring to an aqueous solution of acrylamide monomer.

2. Method according to claim 1, characterized in that said emulsifier and said initiator solution are added in the form of a pre-emulsion.

3. Method according to claim 2, characterized in that the pre-emulsion is homogenized before being added to the monomer solution.

4. Method according to claim 1, characterized in that the emulsifier is non ionic and is formed by a polyoxyethylenated sorbitan ester.

5. Method according to claim 1, characterized in that the emulsifier is anionic and is formed by a sulfated fatty amide.

6. Method according to claim 2, characterized in that said pre-emulsion also comprises a retarder taken from the class formed by para-tertiobutyl catechol and hydroquinone.

7. Method according to claim 2, characterized in that said pre-emulsion also comprises a retarder taken from the class formed by a disodic phosphate, a potassium ferricyanide and an alkaline carbonate.

8. Method according to claim 1, characterized in that the organic peroxide is a diperoxide chosen from the class formed by a 2,2 bis (ter, butyl, peroxy) butane and a ter, butyl, per-2-ethylhexanoate.

9. Method according to claim 1, characterized in that the acrylamide monomer is chosen from the class formed by N-methylol acrylamide and methylol methacrylamide.

10. Method according to claim 1, characterized in that the aqueous acrylamide monomer solution is previously subjected to one at least of the treatments formed by densification and viscosification.